# EUROPEAN PATENT SPECIFICATION

(11) **EP 3 208 313 B1**
(45) Date of publication and mention of the grant of the patent: **30.01.2019**
(21) Application number: 15850775.6
(22) Date of filing: 15.10.2015
(51) Int. Cl.: C08L 79/08, B32B 27/34, C08G 73/10, C08J 5/18, C08J 7/04, C08K 3/36, B32B 15/08, B32B 17/06, B32B 27/20, B32B 27/28

(54) **POLYIMIDE RESIN COMPOSITION, POLYIMIDE FILM AND LAMINATE**
POLYIMIDHARZZUSAMMENSETZUNG, POLYIMIDFILM UND LAMINAT
COMPOSITION DE RÉSINE DE POLYIMIDE, FILM DE POLYIMIDE ET STRATIFIÉ

(30) Priority: 17.10.2014 JP 2014212893
(43) Date of publication of application: 23.08.2017
(73) Proprietor: Mitsubishi Gas Chemical Company, Inc., Tokyo 100-8324 (JP)
(72) Inventor: MATSUMARU, Teruhisa, Hiratsuka-shi Kanagawa 254-0016 (JP); SATO, Yuuki, Hiratsuka-shi Kanagawa 254-0016 (JP); SUENAGA, Shuya, Hiratsuka-shi Kanagawa 254-0016 (JP); DAITO, Masayuki, Hiratsuka-shi Kanagawa 254-0016 (JP); MUKASA, Kazuaki, Hiratsuka-shi Kanagawa 254-0016 (JP)
(74) Representative: Hoffmann Eitle
(86) International application number: PCT/JP2015/079227
(87) International publication number: WO 2016/060213

(56) References cited:
- WO-A1-2009/107429
- WO-A1-2014/007544
- WO-A1-2014/051050
- WO-A1-2015/002273
- WO-A1-2015/122032
- WO-A1-2015/152178
- JP-A- 2002 322 274
- JP-A- 2004 109 311
- JP-A- 2005 306 940
- JP-A- 2006 083 209
- JP-A- 2008 231 327
- JP-A- 2010 180 349
- JP-A- 2011 170 321
- JP-A- 2013 082 774

## Description

### Technical Field

The present invention relates to a polyimide resin composition, and an optical film and a laminate containing the polyimide resin composition. The optical film is worked into a flexible display foreside plate, an organic EL material, an IR cut filter, etc.

### Background Art

In the field of displays, replacing glass with plastics for the substrate is under investigation from the viewpoint of flexibilization, weight reduction, improvement of resistance to breakage, and improvement of productivity. Above all, polyimide has heat resistance in solder reflow and can be made to be soluble in solvent and therefore studies thereof for next-generation optical materials are under way.

A wholly aromatic polyimide yellows owing to intermolecular or intramolecular formation of a charge transfer complex. Accordingly, the use of a fluorine-introduced polyimide, or an alicyclic diamine or an alicyclic acid dianhydride makes it possible to express transparency. It is known that the use of an alicyclic material makes it possible to express solvent solubility, and the resulting polyimide is advantageous in point of easy processability and resin solution storage stability (see PTL 1).

Disclosed is a thermofusible polyimide resin containing a 1,2,4,5-cyclohexanetetracaroxylic acid skeleton in the molecular main chain, which is obtained from 1,2,4,5-cyclohexanetetracarboxylic acid dianhydride, which is an alicyclic acid dianhydride, or a reactive derivative thereof (see PTL 2). In the working example, a transparent yellow polyimide resin film having a glass transition temperature of 304°C is produced by reacting 1,2,4,5-cyclohexanetetracarboxylic acid dianhydride or a reactive derivative thereof with diaminodiphenylmethane to give an amide acid, then applying the resultant onto a substrate of glass or the like, followed by imidating it with heating, and further performing pressure-molding with heating. It is disclosed that a film having a glass transition temperature of 400°C or higher and having a total light transmittance of 80% can be formed by reacting 1,2,4,5-cyclohexanetetracarboxylic acid dianhydride and m-tolidine (see PTL 3).

A polyimide resin having a 1,2,4,5-cyclohexanetetracarboxylic acid skeleton can be readily processed to have an increased molecular weight and can be readily formed into a flexible film and, in addition, the solubility thereof in solvent is sufficiently high, and accordingly the resin is advantageous in point of molding workability into film (see PTL 4).

PTL5 discloses a polyimide resin containing repeating units of 2,2-bis-trifluoromethylbenzidine and 1,2,4,5-cyclohexanetetracarboxylic acid). The films produced with the polyimide resin have resistance to cracking when the film is flexed.

A polyimide and a polyimide film thus produced are excellent in heat resistance and transparency, but for use for front panels of flexible displays, these are not always sufficient in point of mechanical strength (elastic modulus) and surface hardness. As a method for improving surface hardness, there are known a method of coating with a hard coat agent and a method of adding an inorganic filler. However, surface hardness could be improved but flex resistance may worsen as the case may be, and it has been difficult to satisfy all of mechanical strength, surface hardness and flex resistance.

### Citation List

### Patent Literature

PTL 1: JP-A 63-128025
PTL 2: US Patent 3,639,343
PTL 3: JP-A 2006-83209
PTL 4: JP-A 2007-326962
PTL5: JP2010180349

### Summary of Invention

### Technical Problem

Specifically, an object of the present invention is to provide a polyimide resin composition capable of forming a film having heat resistance and transparency and, in addition thereto, having all of mechanical strength, surface hardness and flex resistance that could not be attained in the conventional art, and a polyimide resin, a polyimide film, and a laminate.

### Solution to Problem

The present inventors have assiduously studied and, as a result, have found that a polyimide resin having a specific repeating unit is good in storage stability in solvent, heat resistance, transparency and compatibility with silica fine particles, and that a polyimide resin composition containing the polyimide resin and silica fine particles can form a film and a laminate excellent in surface hardness, mechanical strength and flex resistance. On the basis of these findings, the inventors have reached the present invention. Specifically, the present invention relates to the following 1 to 7.
1. A polyimide resin composition containing a polyimide resin that contains repeating units represented by the following formula (1) and the following formula (2): 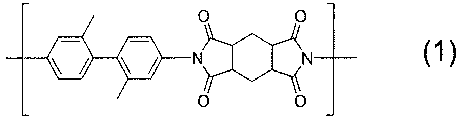 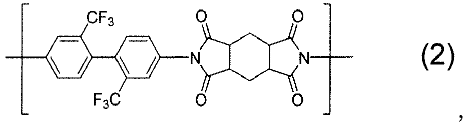 and silica fine particles, wherein the proportion of the repeating unit represented by the formula (2) to the total amount of the repeating units represented by the formula (1) and the formula (2) is from 20 to 60 mol %.
2. The polyimide resin composition according to the above 1, wherein the proportion of the silica fine particles to the total amount of the polyimide resin and the silica fine particles is from 40 to 60% by mass.
3. A polyimide film containing the polyimide resin composition of the above 1 or 2.
4. The polyimide film according to the above 3, wherein a hard coat layer is further formed on at least one surface.
5. A laminate having at least one substrate selected from a plastic film, a silicon wafer, a metal foil and glass, and a polyimide resin layer formed on at least one surface of the substrate by the use of the polyimide resin composition of the above 1 or 2.
6. A polyimide resin containing repeating units represented by the above-mentioned formula (1) and the above-mentioned formula (2), wherein the proportion of the repeating unit represented by the formula (2) to the total amount of the repeating units represented by the formula (1) and the formula (2) is from 20 to 60 mol %.
7. A polyimide film having a hard coat layer formed on at least one surface of a polyimide film that contains the polyimide resin of the above 6.

### Advantageous Effects of Invention

The present invention provides a polyimide resin composition that can form a film having heat resistance and transparency and having, in addition thereto, mechanical strength, surface hardness and flex resistance, a polyimide resin, a polyimide resin film and a laminate.

### Description of Embodiments

### <Polyimide Resin Composition>

The polyimide resin composition of the present invention contains the polyimide resin of the present invention and silica fine particles. The components contained in the polyimide resin composition of the present invention are described below.

### [Polyimide Resin]

The polyimide resin of the present invention contains repeating units represented by the following formula (1) and the following formula (2), wherein the proportion of the repeating unit represented by the formula (2) to the total amount of the repeating units represented by the formula (1) and the formula (2) is from 20 to 60 mol %.

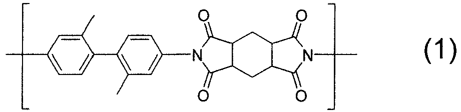

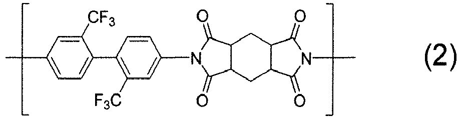

The repeating unit represented by the formula (1) preferably has a skeleton derived from 1,2,4,5-cycohexanetetracarboxyic acid dianhydride and a skeleton derived from 2,2'-dimethylbenzidine (m-tolidine). The repeating unit represented by the formula (2) preferably has a skeleton derived from 1,2,4,5-cyclohexanetetracarboxylic acid dianhydride and a skeleton derived from 2,2'-bis(trifluoromethyl)benzidine.

The proportion of the repeating unit represented by the formula (2) to the total amount of the repeating units represented by the formula (1) and the formula (2) is from 20 to 60 mol % from the viewpoint of mechanical strength, surface hardness and transparency, and is preferably from 30 to 50 mol %.

The polyimide resin of the present invention may contain a repeating unit represented by the following formula (3), as a repeating unit other than the repeating units represented by the formula (1) and the formula (2).

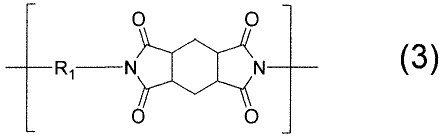

In the formula (3), R₁ represents a divalent group derived from the following aromatic diamine except 2,2'-dimethylbenzidine and 2,2'-bis(trifluoromethyl)benzidine, a divalent group derived from an aliphatic diamine or a divalent group derived from an alicyclic diamine.

The divalent group derived from the aromatic diamine except 2,2'-dimethylbenzidine and 2,2'-bis(trifluoromethyl)benzidine may be any one of divalent aromatic group having 2 to 39 carbon atoms or a combination of the groups. The main chain of the aromatic diamine may have at least one functional group selected from the group consisting of -O-, -SO₂-, -CH₂-, -C(CH₃)₂-, -OSi(CH₃)₂-, -C₂H₄O- and -S-, and may have at least one functional group selected from the group consisting of a carboxyl group, a hydroxyl group and a carbonyl group. The aromatic diamine includes, more specifically, those containing a divalent aliphatic group of a polyalkylene, a polyoxyalkylene, a xylylene and alkyl substitutes, halogen substitutes, carboxy substitutes and hydroxyl substitutes thereof, etc.; a divalent alicyclic group derived from a cyclohexane, a dicyclohexylmethane, a dimethylcyclohexane, an isophorone, a norbornane and alkyl substitutes, halogen substitutes, carboxy substitutes and hydroxyl substitutes thereof, etc.; and a divalent aromatic group derived from a benzene, a naphthalene, a biphenyl, a diphenylmethane, a diphenyl ether, a diphenylsulfone, a benzophenone and alkyl substitutes, halogen substitutes, carboxy substitutes and hydroxyl substitutes thereof, etc. For maintaining mechanical characteristics, an aromatic diamine having a biphenyl skeleton is preferred.

Examples of the divalent group derived from an aromatic diamine include divalent groups derived from 1,4-phenylenediamine, 1,3-phenylenediamine, 2,4-toluenediamine, 4,4'-diaminodiphenyl ether, 3,4'-diaminodiphenyl ether, 4,4'-diaminodiphenylmethane, 1,4-bis(4-aminophenoxy)benzene, 1,3-bis(4-aminophenoxy)benzene, 1,3-bis(3-aminophenoxy)benzene, α,α'-bis(4-aminophenyl)-1,4-diisopropylbenzene, α,α'-bis(3-aminophenyl)-1,4-diisoproylbenzene, 2,2-bis[4-(4-aminophenoxy)phenyl]propane, 4,4'-diaminodiphenyl sulfone, bis[4-(4-aminophenoxy)phenyl] sulfone, bis[4-(3-aminophenoxy)phenyl] sulfone, 2,6-diaminonaphthalene, 1,5-diaminonaphthalene.

Examples of the divalent group derived from an aliphatic diamine include divalent groups derived from ethylenediamine, hexamethylenediamine, polyethylene glycol bis(3-aminopropyl) ether, polypropylene glycol bis(3-aminopropyl) ether, 1,3-bis(aminomethyl)cyclohexane, 1,4-bis(aminomethyl)cyclohexane, p-xylylenediamine, m-xylylenediamine, siloxanediamines.

Examples of the divalent group derived from an alicyclic diamine include divalent groups derived from 4,4'-diaminodicyclohexylmethane, isophoronediamine, norbornanediamine.

The proportion of the total of the repeating units represented by the formula (1) and the formula (2) in all the constituent units of the polyimide resin is preferably from 80 to 100 mol %, more preferably from 90 to 100 mol %, even more preferably from 95 to 100 mol %.

As describe below, the polyimide resin may be produced according to a solution polymerization method, a method of preparing a polyamic acid solution, then forming it into a film and imidating it, etc. A catalyst may be used during production.

The polyimide resin is used as a polyimide solution, and therefore it is preferable that the molecular weight thereof is expressed as a viscosity, especially logarithmic viscosity. The logarithmic viscosity n of the polyimide resin (measured at 30°C using a 0.5 g/dL N-methyl-2-pyrrolidone solution) is preferably from 0.3 dL/g, to 2.0 dL/g. When the logarithmic viscosity is less than 0.3 dL/g, the strength of the polyimide resin itself may be low. A solution of the resin having a logarithmic viscosity of more than 2 dL/g extremely worsens in point of flowability, and therefore stirring in polymerization is difficult and handleability is also difficult. For securing the balance of handleability and strength, the logarithmic viscosity is more preferably from 0.3 to 1.5 dL/g, even more preferably from 1.0 to 1.5 dL/g.

The polyimide resin can be obtained by reacting a diamine component (Z) and a tetracarboxylic acid component (Y).

The tetracarboxylic acid component (Y) includes 1,2,4,5-cyclohexanetetracarboxylic acid, 1,2,4,5-cyclohexanetetracarboxylic acid dianhydride, 1,2,4,5-cyclohexanecarboxylates. The 1,2,4,5-cyclohexanecarboxylates include dimethyl 1,2,4,5-cyclohexanetetracarboxylate, diethyl 1,2,4,5-cyclohxanetetracarboxylate. Isomers of these compounds may be contained. Among the above, 1,2,4,5-cyclohexanetetracarboxylic acid dianhydride is preferred.

The diamine component (Z) contains 2,2'-dimethylenzidine and 2,2'-bis(trifluoromethyl)benzidine as the main components. The proportion of the total of 2,2'-dimethylenzidine and 2,2'-bis(trifluoromethyl)benzidine in the diamine component (Z) is preferably from 80 to 100 mol %, more preferably from 90 to 100 mol %, even more preferably from 95 to 100 mol %.

The diamine component (Z) may contain any other aromatic diamine, aliphatic diamine and alicyclic diamine than the above-mentioned 2,2'-dimethylenzidine and 2,2'-bis(trifluoromethyl)benzidine. In the present invention, "aromatic diamine" means a diamine in which the amino group directly bonds to the aromatic ring, and may contain an aliphatic group, an alicyclic group, an aromatic group and any other substituent in a part of the structure. "Aliphatic diamine" means a diamine in which the amino group directly bonds to the aliphatic group, and may contain an aliphatic group, an alicyclic group, an aromatic group and any other substituent in a part of the structure, and may have at least one functional group selected from the group consisting of a carboxyl group, a hydroxyl group and a carbonyl group. "Alicyclic amine" means a diamine in which the amino group directly bonds to the alicyclic group, and may contain an aliphatic group, an alicyclic group, an aromatic group and any other substituent in a part of the structure, and may have at least one functional group selected from the group consisting of a carboxyl group, a hydroxyl group and a carbonyl group. For example, 2,2'-bis[4-(4-aminophenoxy)phenyl]propane is an aromatic diamine since the amino group directly bonds to the aromatic ring (benzene ring) therein; and m-xylylenediamine is an aliphatic diamine since the amino group directly bonds to the aliphatic group (methylene group) therein.

Examples of the aromatic diamine except the above-mentioned 2,2'-dimethylenzidine and 2,2'-bis(trifluoromethyl)benzidine include 1,4-phenylenediamine, 1,3-phenylenediamine, 2,4-toluenediamine, 4,4'-diaminodiphenyl ether, 3,4'-diaminodiphenyl ether, 4,4'-diaminodiphenylmethane, 1,4-bis(4-aminophenoxy)benzene, 1,3-bis(4-aminophenoxy)benzene, 1,3-bis(3-aminophenoxy)benzene, α,α'-bis(4-aminophenyl)-1,4-diisopropylbenzene, α,α'-bis(3-aminophenyl)-1,4-diisoproylbenzene, 2,2-bis[4-(4-aminophenoxy)phenyl]propane, 4,4'-diaminodiphenyl sulfone, bis[4-(4-aminophenoxy)phenyl] sulfone, bis[4-(3-aminophenoxy)phenyl] sulfone, 2,6-diaminonaphthalene, 1,5-diaminonaphthalene.

Examples of the aliphatic diamine include ethylenediamine, hexamethylenediamine, polyethylene glycol bis(3-aminopropyl) ether, polypropylene glycol bis(3-aminopropyl) ether, 1,3-bis(aminomethyl)cyclohexane, 1,4-bis(aminomethyl)cyclohexane, p-xylylenediamine, m-xylylenediamine, siloxanediamines.

Examples of the alicyclic diamine include 4,4'-diaminodicyclohexylmethane, isophoronediamine, norbornanediamine.

The diamine component (Z) may contain at least one compound selected from the above-exemplified aliphatic diamines, aromatic diamines and alicyclic diamines in addition to 2,2'-dimethylenzidine and 2,2'-bis(trifluoromethyl)benzidine, and may contain plural compounds.

Regarding the production method for the polyimide resin, the resin may be produced according to (1) a solution polymerization method, (2) a method of preparing a polyamic acid solution, then forming it into a film and imidating it, (3) a method of obtaining a salt such as a half-ester salt of 1,2,4,5-cyclohexanetetracarboxylic acid dianhydride or an imide oligomer and processing it for solid-phase polymerization, (4) a method of reacting a tetracarboxylic acid dianhydride and a diisocyanate, or any other conventional known method. These methods may be combined. The reaction of the tetracarboxylic acid (Y) and a diamine component (Z) may be carried out in the presence of a conventional known catalyst of acids, tertiary amines, anhydrides, etc.

The organic solvent to be used in producing the polyimide resin is preferably a specific organic solvent having solubility for diamines, tetracarboxylic acid dianhydrides, polyamide acids, polyimides. Specific examples of such solvent include m-cresol, p-chlorophenol, dimethyl sulfoxide, N,N-dimethylacetamide, N,N-dimethylformamide, diethylene glycol monomethyl ether, N-methylpyrrolidone, γ-butyrolactone, etc. Above all, use of N,N-dimethylacetamide, N,N-dimethylformamide or γ-butyrolactone as an organic solvent is preferred. As the organic solvent, one alone or two or more of the above compounds may be used either singly or as combined. The organic solvent is used in such an amount that the concentration of the polyimide resin therein could be preferably from 1 to 50% by mass, more preferably from 5 to 40% by mass. In the case of solution polymerization, a poor solvent such as hexane, heptane, benzene, toluene, xylene, chlorobenzene, o-dichlorobenzene or the like can be used along with the above-mentioned organic solvent, in such a degree that the poor solvent may not cause polymer precipitation. The polyimide resin may contain the organic solvent used in production.

Among these methods, a solution polymerization method is preferred since a polyimide resin solution can be directly obtained. The solution polymerization method preferably has the following steps (I) to (III).
(I) A mixture containing a diamine component (Z), an organic solvent, and optionally a catalyst is stirred at 10 to 600 rpm to form a uniform solution, this is kept at 30 to 90°C, and a tetracarboxylic acid component (Y) and optionally a catalyst are added thereto.
(II) A mixture containing a tetracarboxylic acid component (Y), an organic solvent, and optionally a catalyst is stirred at 10 to 600 rpm to form a uniform solution, this is kept at 30 to 90°C, and a diamine component (Z) and optionally a catalyst are added thereto.
(III) After the method (I) or (II), this is heated up to 160 to 230°C, preferably up to 180 to 205°C, taking 0.1 to 6 hours. The temperature depends on the boiling point of the organic solvent used. While the components discharged out of the reaction system are collected, the temperature is kept nearly constant for 0.5 to 24 hours, preferably for 2 to 12 hours. Subsequently, as needed, an organic solvent is further added and cooled to a suitable temperature.

A catalyst may be used in solution polymerization to produce the polyimide resin. For example, the catalyst usable in the solution polymerization may be at least one catalyst selected from tertiary amine compounds such as trimethylamine, triethylamine, tripropylamine, tributylamine, triethanolamine, N,N-dimethylethanolamine, N,N-diethylethanolamine, triethylenediamine, N-methylpyrrolidone, N-ethylpyrrolidine, N-methylpiperidine, N-ethylpiperidine, imidazole, pyridine, quinoline, isoquinoline, etc. In the case of using a catalyst, the amount to be used is preferably from 0.1 to 100 mol % relative to the tetracarboxylic acid component (Y), more preferably from 1 to 50 mol %.

The polyimide resin can be produced by reacting the tetracarboxylic acid component (Y) in an amount of preferably from 0.66 moles to 1.5 moles relative to 1 mole of the diamine component (Z), more preferably from 0.9 to 1.1 moles, even more preferably from 0.97 to 1.03 moles.

The method of isolating the polyimide resin from the polyimide resin solution obtained according to the above-mentioned solution polymerization method is not specifically limited so far as the method does not denature the polyimide resin. For example, there are known methods of (1) a method of dropwise adding a polyimide resin solution to a poor solvent, (2) a method of dropwise adding a polyimide resin solution to a poor solvent with stirring, (3) a method of spraying a polyimide resin solution at a high temperature for rapid drying, etc.

The poor solvent may be any one not having solubility for the polyimide resin. There are mentioned water, methanol, ethanol, 1-propanol, 2-propanol, metaxylene, paraxylene, mixed xylene, toluene, acetone, etc. One alone of a poor solvent or a mixed liquid of two or more kinds of poor solvents may be used.

The polyimide resin of the present invention may form by itself a polyimide film excellent in point of heat resistance and tensile elastic modulus, but the polyimide resin composition of the present invention may give a polyimide film having further improved surface hardness and tensile elastic modulus, as further containing silica fine particles.

### [Silica Fine Particles]

Silica for the silica fine particles is silicon dioxide (SiO₂), and the morphology (crystalline morphology, amorphousness, etc.) thereof is not limited. The shape of the silica fine particles is not also limited, including spherical, oval, flat, rod-shaped, fibrous and the like ones.

The silica fine particles for use in the present invention preferably have a small particle size, from the viewpoint of realizing high light transmittance of the polyimide resin composition and the polyimide film, and the mean particle size thereof preferably falls within a range of from 1 to 100 nm, more preferably from 1 to 50 nm, even more preferably from 5 to 25 nm. The mean particle size of the silica fine particles may be measured, for example, according to a BET method.

The silica fine particles may be surface-treated with a surface-treating agent such as a silane coupling agent or the like, from the viewpoint of the dispersibility thereof in a polyimide resin solution.

Any known silane coupling agent is usable. From the viewpoint of the affinity thereof with polyimide resin, an amino group-containing silane coupling agent is preferred. Examples of the amino group-containing silane coupling agent include 3-(2-aminoethylamino)propyldimethoxymethylsilane, 3-(2-aminoethylamino)propyltrimethoxysilane, 3-(2-aminoethylamino)propyltriethoxysilane, 3-(3-aminopropylamino)propyltriethoxysilane, 3-(3-aminopropylamino)propyltrimethoxysilane, 3-aminopropyldiethoxymethylsilane, 3-aminopropyltriethoxysilane, 3-aminopropyltrimethoxysilane, etc. One alone or two or more of these may be used either singly or as combined.

The surface-treating method for the silica fine particles with a silane coupling agent is not specifically limited, for which, any known method is employable. For example, silica fine particles are dispersed in an organic solvent or the like to prepare a dispersion, and the above-mentioned silane coupling agent is added thereto, and stirred at a temperature falling between room temperature and 80°C or so for several hours. A small amount of water may be added to the system to promote the treating reaction.

The proportion of the silica fine particles to the total amount of the polyimide resin and the silica fine particles in the polyimide resin composition of the present invention is preferably from 1 to 80% by mass, more preferably from 30 to 75% by mass, even more preferably from 35 to 60% by mass, still more preferably from 40 to 60% by mass, further more preferably from 40 to 55% by mass, and still further preferably from 40 to 50% by mass. When the proportion of the silica fine particles to the total amount of the polyimide resin and the silica fine particles in the polyimide resin composition falls within the above-mentioned range, the flexibility of the polyimide film to be obtained using the polyimide resin composition is good, and the film can be excellent in heat resistance and excellent in surface hardness and tensile elastic modulus.

### [Other Components]

The polyimide resin composition of the present invention may contain any other additive than the above-mentioned polyimide resin and silica fine particles, within a range not detracting from the advantageous effects of the present invention. Examples of the additive include compounds such as an organic solvent, an antioxidant, a light stabilizer, a surfactant, a flame retardant, a plasticizer, any other polyimide resin than the above-mentioned polyimide resin, a polyamide resin, a polyamideimide resin, etc. The organic solvent includes compounds exemplified hereinabove for the organic solvent for use in producing the polyimide resin, and compounds to be exemplified hereinunder as a dispersion medium for silica fine particles and as a diluent to be added for controlling the solid concentration of the polyimide resin composition, and the preferred examples thereof are also the same as those of the latter.

### [Method for Preparation of Polyimide Resin Composition]

The method for preparing the polyimide resin composition of the present invention is not specifically limited, and a known method is employable. For example, there can be mentioned a method of adding an alkoxysilane or a polyalkoxysilane to a polyimide resin solution, adding thereto a small amount of a hydrolysis accelerator such as water or the like, and dispersing silica fine particles in the solution according to a sol-gel method. Otherwise, a powder of silica fine particles produced as a colloidal silica according to a vapor-phase method may be directly added to a polyimide resin solution and mixed to prepare the composition.

As a preferred example for producing the polyimide resin composition of the present invention, there is mentioned a method of mixing a polyimide resin solution and an organosilica sol to prepare the composition. Organosilica sol is one prepared by dispersing silica fine particles in a dispersion medium in a proportion of 20% by mass or so. The dispersion medium for silica fine particles is preferably a good solvent for polyimide resin, and includes N-methyl- 2 -pyrrolidone, N,N-dimethylformamide, N,N-dimethylacetamide, γ-butyrolactone, propylene glycol monomethyl ether, cyclopentanone, cyclohexanone, ethyl acetate, toluene, methyl ethyl ketone, ethylene glycol, isopropanol, methanol, etc. Among these, N-methyl-2-pyrrolidone, N,N-dimethylformamide, N,N-dimethylacetamide, γ-butyrolactone, propylene glycol monomethyl ether, cyclopentanone, cyclohexanone, ethyl acetate and toluene are preferred.

The solid concentration in the polyimide resin composition of the present invention may be suitably selected in accordance with the processability of the composition in forming polyimide films and laminates to be mentioned below. The solid concentration and the viscosity of the composition may be suitably controlled by evaporation of the organic solvent for concentration or by addition of a diluent. The solid concentration of the polyimide resin composition is preferably from 5 to 60% by mass, more preferably from 10 to 45% by mass. The viscosity of the polyimide resin composition is preferably from 1 to 200 Pa·s, more preferably from 5 to 150 Pa·s. The diluent is not specifically limited so far as it can dissolve polyimide resin, and includes the compounds exemplified hereinabove as the dispersion medium for silica fine particles, and the preferred examples thereof are also the same as those of the latter.

### [Polyimide Film]

The present invention provides a polyimide film containing the above-mentioned polyimide resin composition. The present invention also provides a polyimide film having a hard coat layer formed on at least one surface of a polyimide film containing the polyimide resin. In this description, the polyimide film containing the polyimide resin composition may be referred to as a polyimide-nanocomposite film.

The polyimide film of the present invention can be formed by casting a solution containing the polyimide resin, or the above-mentioned polyimide resin composition containing an organic solvent, onto a smooth support such as a glass plate, a metal plate, a plastic or the like, and heating it for evaporating the solvent component.

The polyimide resin-containing solution can be obtained by dissolving the polyimide resin in a solvent. The solvent may be any one that can dissolve the polyimide resin and includes, though not specifically limited thereto, m-cresol, p-chlorophenol, dimethyl sulfoxide, N-methyl-2-pyrrolidone, N,N-dimethylacetamide, N,N-dimethylformamide, diethylene glycol monomethyl ether, N-methylpyrrolidone, γ-butyrolactone, methanol, isopropanol, ethylene glycol, methyl ethyl ketone, propylene glycol monomethyl ether, cyclopentanone, cyclohexanone, ethyl acetate, toluene, etc. Above all, use of at least one selected from N-methyl-2-pyrrolidone, N,N-dimethylformamide, N,N-dimethylacetamide, γ-butyrolactone, propylene glycol monomethyl ether, cyclopentanone, cyclohexanone, ethyl acetate and toluene is preferred.

The polyimide resin-containing solution may be a polyimide resin solution itself obtained according to a polymerization method. Otherwise, it may be one prepared by mixing at least one selected from the compounds exemplified hereinabove as a solvent for dissolving the polyimide resin, in the polyimide resin solution. By controlling the solid concentration and the viscosity of the polyimide resin-containing solution and the polyimide resin composition containing an organic solvent, the thickness of the polyimide film can be easily controlled.

As needed, a release agent may be applied onto the surface of the support. As the method of applying the polyimide resin-containing solution or the polyimide resin composition containing an organic solvent onto the support and then heating it to evaporate the solvent component, the following method is preferred. Specifically, it is preferable that the solvent is evaporated away at a temperature of 120°C or lower to give a self-supporting film, then the self-supporting film is peeled from the support, the edge of the self-supporting film is fixed, and dried at a temperature not lower than the boiling point of the solvent component and 350°C or lower to produce a polyimide film. Drying in a nitrogen atmosphere is also preferred. The pressure of the drying atmosphere may be any of reduced pressure, normal pressure or increased pressure. The thickness of the polyimide film is preferably from 1 to 200 µm, more preferably from 1 to 100 µm, even more preferably from 20 to 80 µm.

The polyimide film containing the polyimide resin composition of the present invention may have a hard coat layer formed on at least one surface thereof. The polyimide film containing the polyimide resin of the present invention has a hard coat layer formed on at least one surface thereof. The hard coat layer may be formed entirely or partly on at least one surface of the polyimide film. The thickness of the hard coat layer is, from the viewpoint of improving the film surface hardness and attaining high transparency, preferably from 1 to 30 µm, more preferably from 5 to 20 µm.

A known method is employable as a method of forming a hard coat layer on the surface of the polyimide film. For example, there is mentioned a method of applying a solution that contains a hard coat agent onto a surface of the polyimide film to form a film thereon, and then drying it.

As the solution that contains a hard coat agent, for example, there are mentioned acrylic, urethane-type, epoxy-type, silicone-type or the like crosslinking structure-forming compounds. Among these, acrylic, urethane-type or epoxy-type compounds are preferred as having a high effect for improving film surface hardness and excellent in abrasion resistance and transparency.

As the method for applying a solution that contains a hard coat agent onto the surface of a polyimide film to form a film thereon, a known method using a spin coater, a bar coater, a gravure coater, dipping, spraying or the like is employable. In drying and curing the solution that has been applied to and formed into a film, a known technique of UV curing, thermal curing, electron radiation curing or the like can be used.

The solution that contains a hard coat agent may contain at least one selected from a UV absorbent, a light stabilizer, an antioxidant, an antistatic agent, a leveling agent, a defoaming agent, a tackifiers, an anti-fogging agent and an organic solvent.

As the UV absorbent, any conventional known one is usable, and examples thereof include benzotriazole-type, benzophenone-type, phenyl salicylate-type or triazine-type compounds, etc. The benzotriazole-type UV absorbent includes 2-(5-methyl-2-hydroxyphenyl)benzotriazole, 2-(2'-hydroxy-5'-t-octylphenyl)benzotriazole, etc. The benzophenone-type UV absorbent includes 2-hydroxy-4-octoxyenzophenone, 2,4-dihydroxybenzophenone, 2,2-dihydroxy-4-methoxyenzophenone, etc. The phenyl salicylate-type UV absorbent includes p-t-butylphenyl salicylate, etc. The triazine-type UV absorbent includes 2,4-diphenyl-6-(2-hydroxy-4-ethoxyphenyl)-1,3,5-triazine, 2,4-diphenyl-6-(2-hydroxy-4-methoxyphenyl)-1,3,5-triazine, etc. The other UV absorbents include 2-ethylhexyl-2-cyano-3,3'-diphenyl acrylate.

### <Laminate>

The present invention provides a laminate having at least one substrate selected from plastic film, silicon wafer, metal foil and glass, and a polyimide resin layer formed on at least one surface of the substrate using the polyimide resin composition. The laminate of the present invention may have at least one or two or more such polyimide layers.

### [Polyimide Resin Layer]

The polyimide resin layer to be formed on at least one surface of the substrate is formed using the polyimide resin composition of the present invention. The thickness of the polyimide resin layer may be suitably selected in accordance with the use and the like of the laminate, and is preferably from 0.5 to 50 µm, more preferably from 1 to 10 µm.

The polyimide resin layer may contain, within a range not detracting from the advantageous effects of the present invention, besides titanium oxide fine particles, zirconia fine particles, gold nanoparticles, niobium oxide, alumina fine particles, etc., polycarbonates, polystyrenes, polyamides, polyesters such as polyethylene terephthalate, polyether sulfones, polycarboxylic acids, polyacetals, polyphenylene ethers, polysulfones, polybutylenes, polypropylenes, polyacrylamides, polyvinyl chlorides, etc.

### [Substrate]

The substrate for use for the laminate of the present invention is selected from plastic film, silicon wafer, metal foil and glass.

Examples of the resin to constitute the plastic film include polyolefins such as homopolymers or copolymers of ethylene, propylene, isobutene, etc.; amorphous polyolefins such as cyclic polyolefins, etc.; polyesters such as polyethylene terephthalate, polyethylene-2,6-naphthalate, etc.; polyamides such as nylon 6, nylon 66, nylon 12, copolymer nylons, etc.; polyvinyl alcohols, ethylene-vinyl acetate copolymer partial hydrolyzates (EVOH), polyimides, polyether imides, polysulfones, polyether sulfones, polyether ether ketones, polycarbonates, polyarylates, fluororesins, acrylic resins; biodegradable resins such as polylactic acid, etc. Among those, polyethylene 2,6-naphthalate, polyimides, polyether imides, polysulfones, polyether sulfones and polycarbonates are preferred from the viewpoint of heat resistance and dimensional stability.

As the metal which constitutes the metal foil, any metal may be used with no limitation as long as it has electroconductivity. Examples thereof include gold, silver, copper, iron and nickel. Among those, silver or copper is preferred, and copper is more preferred.

The thickness of the substrate may be suitably selected depending on the use and the like of the laminate, and is preferably within a range of from 0.1 to 500 µm, more preferably from 1 to 250 µm.

### [Method for Production of Laminate]

The method for producing the laminate of the present invention is not specifically limited, and a known method is usable. For example, there is mentioned a method of applying the polyimide resin composition of the present invention that contains an organic solvent onto the above-mentioned substrate and removing the organic solvent, etc.

### Examples

The present invention is described specifically by means of the following Examples. However, the present invention is not whatsoever restricted by these Examples.

The physical properties of the films (polyimide films, polyimide-nanocomposite films, hard coat-laminated films) obtained in the following Examples were measured according to the following methods.

### (1) Surface Hardness

For the measurement, a surface texture measurement device, "TYPE14FW" manufactured by Shinto Scientific Co., Ltd., was used in accordance with JIS K5600-5-4.

### (2) Tensile Elastic Modulus and Tensile Strength

For the measurement, a tensile tester, "Strograph VC-1" manufactured by Toyo Seiki Seisaku-Sho Ltd., was used in accordance with ASTM-882-88.

### (3) Total Light Transmittance, YI

The measurement was performed according to JIS K7105 using a color/turbidity coincidence measuring instrument (COH 400), manufactured by Nippon Denshoku Industries Co., Ltd..

### (4) Flex Resistance

For the measurement, a polyimide film was folded once to R = 0 mm, and tested as to whether or not it broke. The measurement was carried out 5 times. In the case where all of the folded five parts did not break, the sample was on the rank A (0 part broke), in the case where even one part did not break, the sample was on the rank B (1 to 4 parts broke), and in the case where all broke, the sample was on the rank C (5 parts broke).

### <Example 1>

In a 2-liter five-necked glass-made round-bottomed flask equipped with a stainless half-moon-shaped stirrer, a nitrogen introduction pipe, a condenser-attached Dean Stark unit, a thermometer and a glass-made end cap, 112.68 g (0.530 mol) of 2,2'-dimethylbenzidine (manufactured by Wakayama Seika Kogyo Co., Ltd.), 42.50 g (0.133 mol) of 2,2'-bis(trifluoromethyl)benzidine (manufactured by Wakayama Seika Kogyo Co., Ltd.), 297.15 g of γ-butyrolactone (manufactured by Mitsubishi Chemical Corporation) and, as a catalyst, 33.57 g of triethylamine (manufactured by Kanto Chemical Co., Inc.) were stirred at an internal reaction system temperature of 70°C in a nitrogen atmosphere at 200 rpm to prepare a solution. 147.85 g (0.663 mol) of 1,2,4,5-cyclohexanetetracarboxylic acid dianhydride (manufactured by Mitsubishi Gas Chemical Co., Ltd.) and 74.27 g of N,N-dimethylacetamide (manufactured by Mitsubishi Gas Chemical Co., Ltd.) were added thereto each at a time, and then heated with a mantle heater to thereby raise the internal reaction system temperature up to 190°C, taking about 20 minutes. The distillate component was collected, and while the stirring number was controlled in accordance with the viscosity increase, the internal reaction system temperature was kept at 190°C for 3.5 hours. 48.26 g of N,N-dimethylacetamide was further added and kept at 190°C for 1 hour. Subsequently, 36.18 g of N,N-dimethylacetamide was added, and kept at 190°C for 1 hour. Finally, 664.14 g of N,N-dimethylacetamide was added, and then stirred at around 100°C for about 3 hours to form a uniform solution, thereby giving a polyimide resin solution (a) having a solid concentration of 20% by mass and a relative viscosity of 1.4 dL/g.

As a result of analysis of the polyimide resin solution (a) according to ¹H NMR, the proportion of the structural unit derived from 2,2'-bis(trifluoromethyl)benzidine to the total of the structural unit derived from 2,2'-dimethylbenzidine and the structural unit derived from 2,2'-bis(trifluoromethyl)benzidine in the resultant polyimide resin was 20 mol %. FT-IR confirmed disappearance of starting material peaks and appearance of imide skeleton-derived peaks.

The resultant polyimide resin solution (a) was applied onto a glass substrate, and the solvent was evaporated away under the condition of 60°C for 30 minutes and 100°C for 1 hour to form a self-supporting film, and thereafter the self-supporting film was peeled off from the glass substrate, the edge of the film was fixed, and dried at 280°C in a nitrogen atmosphere for 2 hours to remove the solvent, thereby giving a polyimide film having a thickness of 65 µm. The elastic tensile modulus of the polyimide film was 3.4 GPa, the tensile strength was 121.2 MPa, the surface hardness was < 6B, the total light transmittance was 90.3%, the YI index was 1.5 and the flex resistance evaluation was on the rank A.

50.0 g of the polyimide resin solution (a), and 40 g of a colloidal silica dispersion ("DMAC-ST" manufactured by Nissan Chemical Industries, Ltd., silica content: 20% by mass, mean particle size: 11 nm, N,N-dimethylacetamide solution) were stirred in a rotating/revolving mixer (ARE-250, manufactured by Thinky Corporation) at 2,000 rpm for 2 minutes to give a polyimide-nanosilica composite solution. The solution was applied onto a glass substrate, and the solvent was evaporated away under the condition of 60°C for 30 minutes and 100°C for 1 hour to give a self-supporting film, and then the self-supporting film was peeled away from the glass substrate, the edge of the film was fixed and dried at 280°C in a nitrogen atmosphere for 2 hours to give a polyimide-nanocomposite film A having a thickness of 58 µm. The evaluation results of the polyimide-nanocomposite film A are shown in Table 1.

### <Example 2>

In a 300-mL five-necked glass-made round-bottomed flask equipped with a stainless half-moon-shaped stirrer, a nitrogen introduction pipe, a condenser-attached Dean Stark unit, a thermometer and a glass-made end cap, 12.634 g (0.060 mol) of 2,2'-dimethylbenzidine (manufactured by Wakayama Seika Kogyo Co., Ltd.), 12.706 g (0.040 mol) of 2,2'-bis(trifluoromethyl)benzidine (manufactured by Wakayama Seika Kogyo Co., Ltd.), 46.518 g of γ-butyrolactone (manufactured by Mitsubishi Chemical Corporation) and, as a catalyst, 5.018 g of triethylamine (manufactured by Kanto Chemical Co., Inc.) were stirred at an internal reaction system temperature of 70°C in a nitrogen atmosphere at 200 rpm to prepare a solution. 22.235 g (0.099 mol) of 1,2,4,5-cyclohexanetetracarboxylic acid dianhydride (manufactured by Mitsubishi Gas Chemical Co., Ltd.) and 11.629 g of N,N-dimethylacetamide (manufactured by Mitsubishi Gas Chemical Co., Ltd.) were added thereto each at a time, and then heated with a mantle heater to thereby raise the internal reaction system temperature up to 190°C, taking about 20 minutes. The distillate component was collected, and while the stirring number was controlled in accordance with the viscosity increase, the internal reaction system temperature was kept at 190°C for 3.75 hours. 4.92 g of N,N-dimethylacetamide was further added and kept at 190°C for 1.5 hours. Finally, 112.94 g of N,N-dimethylacetamide was added, and then stirred at around 100°C for about 3 hours to form a uniform solution, thereby giving a polyimide resin solution (b) having a solid concentration of 20% by mass and a relative viscosity of 1.3 dL/g.

As a result of analysis according to the same method as in Example 1, the proportion of the structural unit derived from 2,2'-bis(trifluoromethyl)benzidine to the total of the structural unit derived from 2,2'-dimethylbenzidine and the structural unit derived from 2,2'-bis(trifluoromethyl)benzidine in the resultant polyimide resin was 40 mol %. FT-IR confirmed disappearance of starting material peaks and appearance of imide skeleton-derived peaks.

A polyimide film having a thickness of 62 µm was obtained according to the same method as in Example 1 except that the polyimide resin solution (b) was used. The elastic tensile modulus of the polyimide film was 3.6 GPa, the surface hardness was < 6B, the total light transmittance was 90.3%, the YI index was 1.8 and the flex resistance evaluation was on the rank A.

A polyimide-nanocomposite film B having a thickness of 45 µm was obtained according to the same method as in Example 1 except that the polyimide resin solution (b) was used. The evaluation results of the polyimide-nanocomposite film B are shown in Table 1.

### <Example 3>

In the same five-necked glass-made round-bottomed flask as that used in Example 2, 8.032 g (0.038 mol) of 2,2'-dimethylbenzidine (manufactured by Wakayama Seika Kogyo Co., Ltd.), 18.174 g (0.057 mol) of 2,2'-bis(trifluoromethyl)benzidine (manufactured by Wakayama Seika Kogyo Co., Ltd.), 46.355 g of γ-butyrolactone (manufactured by Mitsubishi Chemical Corporation) and, as a catalyst, 4.786 g of triethylamine (manufactured by Kanto Chemical Co., Inc.) were stirred at an internal reaction system temperature of 70°C in a nitrogen atmosphere at 200 rpm to prepare a solution. 21.203 g (0.095 mol) of 1,2,4,5-cyclohexanetetracarboxylic acid dianhydride (manufactured by Mitsubishi Gas Chemical Co., Ltd.) and 11.59 g of N,N-dimethylacetamide (manufactured by Mitsubishi Gas Chemical Co., Ltd.) were added thereto each at a time, and then heated with a mantle heater to thereby raise the internal reaction system temperature up to 190°C, taking about 20 minutes. The distillate component was collected, and while the stirring number was controlled in accordance with the viscosity increase, the internal reaction system temperature was kept at 190°C for 5.75 hours to prepare a polyimide solution. Finally, 118.06 g of N,N-dimethylacetamide was added, and then stirred at around 100°C for about 3 hours to form a uniform solution, thereby giving a polyimide resin solution (c) having a solid concentration of 20% by mass and a relative viscosity of 1.3 dL/g.

As a result of analysis according to the same method as in Example 1, the proportion of the structural unit derived from 2,2'-bis(trifluoromethyl)benzidine to the total of the structural unit derived from 2,2'-dimethylbenzidine and the structural unit derived from 2,2'-bis(trifluoromethyl)benzidine in the resultant polyimide resin was 60 mol %. FT-IR confirmed disappearance of starting material peaks and appearance of imide skeleton-derived peaks.

A polyimide film having a thickness of 64 µm was obtained according to the same method as in Example 1 except that the polyimide resin solution (c) was used. The elastic tensile modulus of the polyimide film was 3.1 GPa, the tensile strength was 132.1 MPa, the surface hardness was < 6B, the total light transmittance was 90.7%, the YI index was 1.8 and the flex resistance evaluation was on the rank A.

A polyimide-nanocomposite film C having a thickness of 56 µm was obtained according to the same method as in Example 1 except that the polyimide resin solution (c) was used. The evaluation results of the polyimide-nanocomposite film C are shown in Table 1.

### <Example 4>

In the same five-necked glass-made round-bottomed flask as that used in Example 2, 10.278 g (0.048 mol) of 2,2'-dimethylbenzidine (manufactured by Wakayama Seika Kogyo Co., Ltd.), 15.505 g (0.048 mol) of 2,2'-bis(trifluoromethyl)benzidine (manufactured by Wakayama Seika Kogyo Co., Ltd.), 46.435 g of γ-butyrolactone (manufactured by Mitsubishi Chemical Corporation) and, as a catalyst, 4.899 g of triethylamine (manufactured by Kanto Chemical Co., Inc.) were stirred at an internal reaction system temperature of 70°C in a nitrogen atmosphere at 200 rpm to prepare a solution. 21.707 g (0.097 mol) of 1,2,4,5-cyclohexanetetracarboxylic acid dianhydride (manufactured by Mitsubishi Gas Chemical Co., Ltd.) and 11.61 g of N,N-dimethylacetamide (manufactured by Mitsubishi Gas Chemical Co., Ltd.) were added thereto each at a time, and then heated with a mantle heater to thereby raise the internal reaction system temperature up to 190°C, taking about 20 minutes. The distillate component was collected, and while the stirring number was controlled in accordance with the viscosity increase, the internal reaction system temperature was kept at 190°C for 5.75 hours to prepare a polyimide solution. Finally, 117.96 g of N,N-dimethylacetamide was added, and then stirred at around 100°C for about 3 hours to form a uniform solution, thereby giving a polyimide resin solution (d) having a solid concentration of 20% by mass and a relative viscosity of 1.2 dL/g.

As a result of analysis according to the same method as in Example 1, the proportion of the structural unit derived from 2,2'-bis(trifluoromethyl)benzidine to the total of the structural unit derived from 2,2'-dimethylbenzidine and the structural unit derived from 2,2'-bis(trifluoromethyl)benzidine in the resultant polyimide resin was 50 mol %. FT-IR confirmed disappearance of starting material peaks and appearance of imide skeleton-derived peaks.

A polyimide film having a thickness of 55 µm was obtained according to the same method as in Example 1 except that the polyimide resin solution (d) was used. The elastic tensile modulus of the polyimide was 3.3 GPa, the tensile strength was 114.7 MPa, the surface hardness was < 6B, the total light transmittance was 90.4%, the YI index was 1.8 and the flex resistance evaluation was on the rank A.

A polyimide-nanocomposite film D having a thickness of 45 µm was obtained according to the same method as in Example 1 except that the polyimide resin solution (d) was used. The evaluation results of the polyimide-nanocomposite film D are shown in Table 1.

### <Preparation of Hard Coat Solution>

In the same 300-mL five-necked glass-made round-bottomed flask as that used in Example 2, 102.6 g of a urethane-acrylic hard coating agent (Hitalloid 7902-1, manufactured by Hitachi Chemical Co., Ltd.), 9.4 g of 2'-ethylhexyl-2-cyano-3,3'-diphenyl acrylate (SEESORB 502, manufactured by Shipro Kasei Kaisha, Ltd.) as a UV absorbent, 4.6 g of 1-hydroxycyclohexyl phenyl ketone (IRGACURE 184, manufactured by BASF Japan Corporation) as a photopolymerization initiator, and 83.4 g of ethyl acetate (manufactured by Kanto Chemical Co., Inc.) were stirred in a nitrogen atmosphere at 200 rpm for 30 minutes to prepare a hard coat solution.

### <Example 5>

A proper quantity of the hard coat solution prepared in the previous paragraph was dropwise applied onto the polyimide film having a thickness of 60 µm obtained using the polyimide resin solution (a) according to the same method as in Example 1, and formed into a film using a bar coater #8. The formed film was left in a hot air drier previously heated at a temperature of 80°C for 2 minutes to evaporate away the excessive organic solvent, and then using a high-pressure mercury lamp at an output density of 80 W/cm, this was irradiated with UV rays at a position of 10 cm beneath the light source at a conveyor speed of 3.0 m/min, and cured. In that manner, a hard coat-laminated film E was obtained, in which the coating film thickness of the hard coat layer was 6.5 µm. The evaluation results of the hard coat-laminated film E are shown in Table 1.

<Example 6>

According to the same method as in Example 5 except that a polyimide-nanocomposite film having a thickness of 57 µm obtained according to the same method as in Example 1, the hard coat solution was formed into a film to give a hard coat-laminated film F. The evaluation results of the hard coat-laminated film F are shown in Table 1.

### <Comparative Example 1>

In the same five-necked glass-made round-bottomed flask as that used in Example 2, 3.838 g (0.018 mol) of 2,2'-dimethylbenzidine (manufactured by Wakayama Seika Kogyo Co., Ltd.), 23.157 g (0.072 mol) of 2,2'-bis(trifluoromethyl)benzidine (manufactured by Wakayama Seika Kogyo Co., Ltd.), 46.208 g of γ-butyrolactone (manufactured by Mitsubishi Chemical Corporation) and, as a catalyst, 4.573 g of triethylamine (manufactured by Kanto Chemical Co., Inc.) were stirred at an internal reaction system temperature of 70°C in a nitrogen atmosphere at 200 rpm to prepare a solution. 20.263 g (0.090 mol) of 1,2,4,5-cyclohexanetetracarboxylic acid dianhydride (manufactured by Mitsubishi Gas Chemical Co., Ltd.) and 11.55 g of N,N-dimethylacetamide (manufactured by Mitsubishi Gas Chemical Co., Ltd.) were added thereto each at a time, and then heated with a mantle heater to thereby raise the internal reaction system temperature up to 190°C, taking about 20 minutes. The distillate component was collected, and while the stirring number was controlled in accordance with the viscosity increase and while the internal reaction system temperature was kept at 190°C, the system was stirred for 5.75 hours to give a polyimide solution. Finally, 118.242 g of N,N-dimethylacetamide was added, and then stirred at around 100°C for about 3 hours to form a uniform solution, thereby giving a polyimide resin solution (e) having a solid concentration of 20% by mass and a relative viscosity of 1.3 dL/g.

As a result of analysis according to the same method as in Example 1, the proportion of the structural unit derived from 2,2'-bis(trifluoromethyl)benzidine to the total of the structural unit derived from 2,2'-dimethylbenzidine and the structural unit derived from 2,2'-bis(trifluoromethyl)benzidine in the resultant polyimide resin was 80 mol %. FT-IR confirmed disappearance of starting material peaks and appearance of imide skeleton-derived peaks. A polyimide film having a thickness of 48 µm was obtained according to the same method as in Example 1 except that the polyimide resin solution (e) was used. The elastic tensile modulus of the polyimide film was 2.8 GPa, the tensile strength was 107.5 MPa, the surface hardness was < 6B, the total light transmittance was 90.4%, the YI index was 2.2 and the flex resistance evaluation was on the rank A.

A polyimide-nanocomposite film G having a thickness of 53 µm was obtained according to the same method as in Example 1 except that the polyimide resin solution (e) was used. The evaluation results of the polyimide-nanocomposite film G are shown in Table 1.

### <Comparative Example 2>

In the same five-necked glass-made round-bottomed flask as that used in Example 2, 30.237 g (0.094 mol) of 2,2'-bis(trifluoromethyl)benzidine (manufactured by Wakayama Seika Kogyo Co., Ltd.), 50.261 g of γ-butyrolactone (manufactured by Mitsubishi Chemical Corporation) and, as a catalyst, 4.777 g of triethylamine (manufactured by Kanto Chemical Co., Inc.) were stirred at an internal reaction system temperature of 70°C in a nitrogen atmosphere at 200 rpm to prepare a solution. 21.166 g (0.094 mol) of 1,2,4,5-cyclohexanetetracarboxylic acid dianhydride (manufactured by Mitsubishi Gas Chemical Co., Ltd.) and 12.57 g of N,N-dimethylacetamide (manufactured by Mitsubishi Gas Chemical Co., Ltd.) were added thereto each at a time, and then heated with a mantle heater to thereby raise the internal reaction system temperature up to 190°C, taking about 20 minutes. The distillate component was collected, and while the stirring number was controlled in accordance with the viscosity increase, the internal reaction system temperature was kept at 190°C for 5.75 hours. Finally, 129.17 g of N,N-dimethylacetamide was added, and then stirred at around 100°C for about 3 hours to form a uniform solution, thereby giving a polyimide resin solution (f) having a solid concentration of 20% by mass and a relative viscosity of 1.2 dL/g.

FT-IR confirmed disappearance of starting material peaks and appearance of imide skeleton-derived peaks.

A polyimide film having a thickness of 48 µm was obtained according to the same method as in Example 1 except that the polyimide resin solution (f) was used. The elastic tensile modulus of the polyimide film was 2.9 GPa, the tensile strength was 121.9 MPa, the surface hardness was < 6B, the total light transmittance was 90.9%, the YI index was 2.0 and the flex resistance was on the rank A.

A polyimide-nanocomposite film H having a thickness of 48 µm was obtained according to the same method as in Example 1 except that the polyimide resin solution (f) was used. The evaluation results of the polyimide-nanocomposite film H are shown in Table 1.

### <Comparative Example 3>

In the same five-necked glass-made round-bottomed flask as that used in Example 2, 21.207 g (0.100 mol) of 2,2'-dimethylbenzidine (manufactured by Wakayama Seika Kogyo Co., Ltd.), 46.236 g of γ-butyrolactone (manufactured by Mitsubishi Chemical Corporation) and, as a catalyst, 2.527 g of triethylamine (manufactured by Kanto Chemical Co., Inc.) were stirred at an internal reaction system temperature of 70°C in a nitrogen atmosphere at 200 rpm to prepare a solution. 22.393 g (0.100 mol) of 1,2,4,5-cyclohexanetetracarboxylic acid dianhydride (manufactured by Mitsubishi Gas Chemical Co., Ltd.) and 11.56 g of N,N-dimethylacetamide (manufactured by Mitsubishi Gas Chemical Co., Ltd.) were added thereto each at a time, and then heated with a mantle heater to thereby raise the internal reaction system temperature up to 190°C, taking about 20 minutes. The distillate component was collected, and while the stirring number was controlled in accordance with the viscosity increase, the internal reaction system temperature was kept at 190°C for 4.5 hours to give a polyimide solution. Finally, 102.20 g of N,N-dimethylacetamide was added, and then stirred at around 100°C for about 3 hours to form a uniform solution, thereby giving a polyimide resin solution (g) having a solid concentration of 20% by mass and a relative viscosity of 1.2 dL/g.

FT-IR confirmed disappearance of starting material peaks and appearance of imide skeleton-derived peaks. A polyimide film having a thickness of 80 µm was obtained according to the same method as in Example 1 except that the polyimide resin solution (g) was used. The elastic tensile modulus of the polyimide film was 3.2 GPa, the tensile strength was 126.9 MPa, the surface hardness was < 6B, the total light transmittance was 89.9%, the YI index was 1.6 and the flex resistance was on the rank A.

A polyimide-nanocomposite film I having a thickness of 55 µm was obtained according to the same method as in Example 1 except that the polyimide resin solution (g) was used. The evaluation results of the polyimide-nanocomposite film I are shown in Table 1.

### <Comparative Example 4>

In the same five-necked glass-made round-bottomed flask as that used in Example 2, 30.173 g (0.073 mol) of 2,2'-bis(4-(4-aminophenoxy)phenyl)propane (manufactured by Wakayama Seika Kogyo Co., Ltd.), 45.612 g of γ-butyrolactone (manufactured by Mitsubishi Chemical Corporation) and, as a catalyst, 3.719 g of triethylamine (manufactured by Kanto Chemical Co., Inc.) were stirred at an internal reaction system temperature of 70°C in a nitrogen atmosphere at 200 rpm to prepare a solution. 16.476 g (0.073 mol) of 1,2,4,5-cyclohexanetetracarboxylic acid dianhydride (manufactured by Mitsubishi Gas Chemical Co., Ltd.) and 11.40 g of N,N-dimethylacetamide (manufactured by Mitsubishi Gas Chemical Co., Ltd.) were added thereto each at a time, and then heated with a mantle heater to thereby raise the internal reaction system temperature up to 190°C, taking about 20 minutes. The distillate component was collected, and while the stirring number was controlled in accordance with the viscosity increase, the internal reaction system temperature was kept at 190°C for 4 hours to prepare a polyimide solution. While this was diluted with γ-butyrolactone as needed in accordance with the increase in viscosity (total added amount 29.8 g) and when the total stirring time reached over 5.25 hours, 89.368 g of N,N-dimethylacetamide was added so that the solid concentration could be 20% by mass, and then stirred at around 100°C for about 3 hours to form a uniform solution, thereby giving a polyimide resin solution (h) having a solid concentration of 20% by mass and a relative viscosity of 1.3 dL/g.

FT-IR confirmed disappearance of starting material peaks and appearance of imide skeleton-derived peaks.

A polyimide film having a thickness of 50 µm was obtained according to the same method as in Example 1 except that the polyimide resin solution (h) was used. The tensile strength of the polyimide film was 2.2 GPa, the tensile strength was 86.7 MPa, the surface hardness was < 6B, the total light transmittance was 89.7%, the YI index was 1.3 and the flex resistance evaluation was on the rank A.

A polyimide-nanocomposite film J having a thickness of 54 µm was obtained according to the same method as in Example 1 except that the polyimide resin solution (h) was used. The evaluation results of the polyimide-nanocomposite film J are shown in Table 1.

### <Comparative Example 5>

In the same five-necked glass-made round-bottomed flask as that used in Example 2, 22.686 g (0.113 mol) of 4,4'-diaminodiphenyl ether (manufactured by Wakayama Seika Kogyo Co., Ltd.), 47.014 g of γ-butyrolactone (manufactured by Mitsubishi Chemical Corporation) and, as a catalyst, 5.732 g of triethylamine (manufactured by Kanto Chemical Co., Inc.) were stirred at an internal reaction system temperature of 70°C in a nitrogen atmosphere at 200 rpm to prepare a solution. 25.397 g (0.113 mol) of 1,2,4,5-cyclohexanetetracarboxylic acid dianhydride (manufactured by Mitsubishi Gas Chemical Co., Ltd.) and 11.75 g of N,N-dimethylacetamide (manufactured by Mitsubishi Gas Chemical Co., Ltd.) were added thereto each at a time, and then heated with a mantle heater to thereby raise the internal reaction system temperature up to 190°C, taking about 20 minutes. The distillate component was collected, and while the stirring number was controlled in accordance with the viscosity increase, the internal reaction system temperature was kept at 190°C for 4.75 hours to prepare a polyimide solution. After 117.206 g of N,N-dimethylacetamide was added, this was stirred at around 100°C for about 3 hours to form a uniform solution, thereby giving a polyimide resin solution (i) having a solid concentration of 20% by mass and a relative viscosity of 1.4 dL/g.

FT-IR confirmed disappearance of starting material peaks and appearance of imide skeleton-derived peaks.

A polyimide film having a thickness of 64 µm was obtained according to the same method as in Example 1 except that the polyimide resin solution (i) was used. The tensile elastic modulus of the polyimide film was 2.6 GPa, the tensile strength was 104.3 MPa, the surface hardness was < 6B, the total light transmittance was 89.3%, the YI index was 2.5 and the flex resistance evaluation was on the rank A.

A polyimide-nanocomposite film K having a thickness of 56 µm was obtained according to the same method as in Example 1 except that the polyimide resin solution (i) was used. The evaluation results of the polyimide-nanocomposite film K are shown in Table 1.

### <Comparative Example 6>

In the same five-necked glass-made round-bottomed flask as that used in Example 2, 14.034 g (0.044 mol) of 2,2'-bis(trifluoromethyl)benzidine (manufactured by Wakayama Seika Kogyo Co., Ltd.), 9.496 g (0.044 mol) of 3,3'-dihydroxybenzidine (manufactured by Wakayama Seika Kogyo Co., Ltd.), 51.790 g of γ-butyrolactone (manufactured by Mitsubishi Chemical Corporation) and, as a catalyst, 0.967 g of triethylamine (manufactured by Kanto Chemical Co., Inc.) were stirred at an internal reaction system temperature of 100°C in a nitrogen atmosphere at 200 rpm to prepare a solution. 19.757 g (0.088 mol) of 1,2,4,5-cyclohexanetetracarboxylic acid dianhydride (manufactured by Mitsubishi Gas Chemical Co., Ltd.) and 12.95 g of N,N-dimethylacetamide (manufactured by Mitsubishi Gas Chemical Co., Ltd.) were added thereto each at a time, and then heated with a mantle heater to thereby raise the internal reaction system temperature up to 190°C, taking about 20 minutes. The distillate component was collected, and while the stirring number was controlled in accordance with the viscosity increase, the internal reaction system temperature was kept at 190°C for 4.0 hours. Finally, 95.26 g of N,N-dimethylacetamide was added and then stirred at around 100°C for about 3 hours to form a uniform solution, thereby giving a polyimide resin solution (j) having a solid concentration of 20% by mass. As the polyimide resin solution (j) became insolubilized owing to the heat history in solid extraction, and therefore the logarithmic viscosity thereof could not be measured.

FT-IR confirmed disappearance of starting material peaks and appearance of imide skeleton-derived peaks.

A polyimide film having a thickness of 67 µm was obtained according to the same method as in Example 1 except that the polyimide resin solution (j) was used. The tensile elastic modulus of the polyimide resin film was 3.3 GPa, the tensile strength was 105.8 MPa, the surface hardness was < 6B, the total light transmittance was 86.2%, the YI index was 8.5 and the flex resistance evaluation was on the rank A.

A polyimide-nanocomposite film L having a thickness of 53 µm was obtained according to the same method as in Example 1 except that the polyimide resin solution (j) was used. The evaluation results of the polyimide-nanocomposite film L are shown in Table 1.

### <Example 7>

A polyimide-nanocomposite film M having a thickness of 45 µm was obtained according to the same method as in Example 1 except that 20 g of a colloidal silica dispersion ("DMAC-ST" manufactured by Nissan Chemical Industries, Ltd., silica content: 20% by mass, mean particle size: 11 nm, N,N-dimethylacetamide solution) was used. The tensile elastic modulus of the polyimide-nanocomposite film M was 4.5 GPa, the tensile strength was 119 MPa, the surface hardness was < 6B, the total light transmittance was 88%, the YI index was 4.4 and the flex resistance evaluation was on the rank A.

**[Table 1]**

| | Structural Units of Polyimide Resin | | | Polyimide Resin/Silica Fine Particles (ratio by mass) | Evaluation of Polyimide Film | | | | | |
|---|---|---|---|---|---|---|---|---|---|---|
| | mTB (mol %) | TFMB (mol %) | Other Diamine (mol %) | | Tensile Elastic Modulus (GPa) | Tensile Strength (MPa) | Surface Hardness | Total Light Transmittance (%) | YI | Flex Resistance |
| Example 1 | 80 | 20 | - | 56/44 | 5.1 | 84.7 | H | 90.5 | 3.6 | A |
| Example 2 | 60 | 40 | - | 56/44 | 5.3 | 90.0 | H | 91.3 | 1.7 | A |
| Example 3 | 40 | 60 | - | 56/44 | 5.1 | 84.4 | HB | 91.3 | 2.2 | A |
| Example 4 | 50 | 50 | - | 56/44 | 5.4 | 87.7 | H | 91.1 | 2.7 | A |
| Example 5 | 80 | 20 | - | 100/0 | 3.1 | 90.0 | H | 91.3 | 1.5 | A |
| Example 6 | 80 | 20 | - | 56/44 | 4.3 | 70.6 | 4H | 91.4 | 3.6 | A |
| Comparative Example 1 | 20 | 80 | - | 56/44 | 4.7 | 92.6 | B | 91.3 | 2.4 | B |
| Comparative Example 2 | - | 100 | - | 56/44 | 4.7 | 79.9 | B | 91.4 | 1.7 | C |
| Comparative Example 3 | 100 | - | - | 56/44 | 4.8 | 67.8 | B | 90.1 | 5.6 | B |
| Comparative Example 4 | - | - | BAPP 100 | 56/44 | 4.4 | 85.7 | <6B | 90.3 | 1.1 | A |
| Comparative Example 5 | - | - | ODA 100 | 56/44 | 4.6 | 81.3 | <6B | 88.1 | 9.1 | C |
| Comparative Example 6 | - | 50 | HAB 50 | 56/44 | 4.7 | 102.6 | <6B | 87.5 | 8.4 | A |

The abbreviations in the table are as follows.
mTB: 2,2'-dimethylbenzidine (m-tolidine)
TFMB: 2,2'-bis(trifluoromethyl)benzidine
BAPP: 2,2-bis[4-(4-aminophenoxy)phenyl]propane
ODA: 4,4'-diaminodiphenyl ether
HAB: 3,3'-dihydroxybenzidine

### Industrial Applicability

The polyimide resin of the present invention has solubility in specific solvents, heat resistance and transparency. Therefore, the molecular weight of the resin can be increased easily up to a certain level or more through solution polymerization, and the resin has good affinity for silica fine particles. The polyimide resin composition of the present invention contains the polyimide resin having the above-mentioned characteristics and silica fine particles, and can be formed into a film having mechanical strength, surface hardness and flex resistance, and is therefore favorably used for various optical films. The polyimide film and the laminate of the present invention exhibit excellent performance as flexible display front panels, organic EL materials, IR cut filters, etc.

## Claims

1. A polyimide resin composition comprising a polyimide resin that contains repeating units represented by the following formula (1) and the following formula (2): 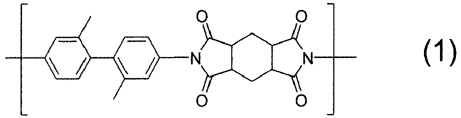 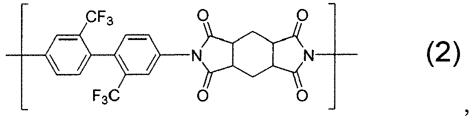 and silica fine particles,
wherein the proportion of the repeating unit represented by the formula (2) to the total amount of the repeating units represented by the formula (1) and the formula (2) is from 20 to 60 mol %.

2. The polyimide resin composition according to claim 1, wherein the proportion of the silica fine particles to the total amount of the polyimide resin and the silica fine particles is from 40 to 60% by mass.

3. A polyimide film comprising the polyimide resin composition of claim 1 or 2.

4. The polyimide film according to claim 3, wherein a hard coat layer is further formed on at least one surface.

5. A laminate having at least one substrate selected from a plastic film, a silicon wafer, a metal foil and glass, and a polyimide resin layer which is formed on at least one surface of the substrate by using the polyimide resin composition of claim 1 or 2.

6. A polyimide resin containing repeating units represented by the following formula (1) and the following formula (2): 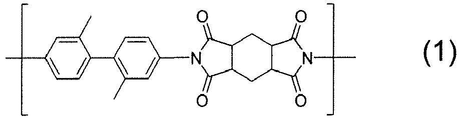 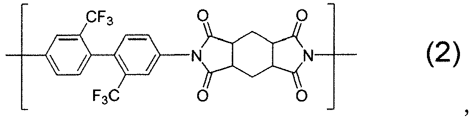 wherein the proportion of the repeating unit represented by the formula (2) to the total amount of the repeating units represented by the formula (1) and the formula (2) is 20 to 60 mol %.

7. A polyimide film having a hard coat layer formed on at least one surface of a polyimide film that contains the polyimide resin of claim 6.

## Patentansprüche

1. Polyimidharzzusammensetzung, umfassend ein Polyimidharz, das durch die folgende Formel (1) und die folgende Formel (2) dargestellte Wiederholungseinheiten enthält: 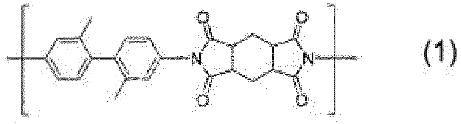 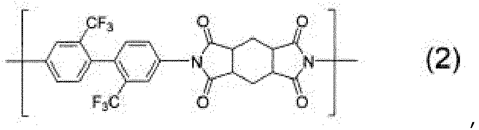 und Silika-Feinpartikel,
wobei das Verhältnis der durch die folgende Formel (2) dargestellten Wiederholungseinheit zu der Gesamtmenge der durch die Formel (1) und die Formel (2) dargestellten Wiederholungseinheiten 20 bis 60 mol-% beträgt.

2. Polyimidharzzusammensetzung gemäß Anspruch 1, wobei das Verhältnis der Silika-Feinpartikel zu der Gesamtmenge des Polyimidharzes und der Silika-Feinpartikel 40 bis 60 Masse-% beträgt.

3. Polyimidfilm, umfassend die Polyimidharzzusammensetzung gemäß Anspruch 1 oder 2.

4. Polyimidfilm gemäß Anspruch 3, wobei ferner eine harte Deckschicht auf mindestens einer Oberfläche gebildet ist.

5. Laminat, das mindestens ein Substrat, ausgewählt aus einer Kunststofffolie, einem Siliciumwafer, einer Metallfolie und Glas, und eine Polyimidharzschicht aufweist, die auf mindestens einer Oberfläche des Substrats unter Verwendung der Polyimidharzzusammensetzung gemäß Anspruch 1 oder 2 gebildet ist.

6. Polyimidharz, das durch die folgende Formel (1) und die folgende Formel (2) dargestellte Wiederholungseinheiten enthält: 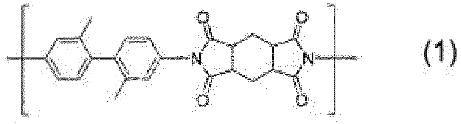 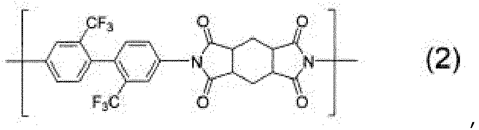 wobei das Verhältnis der durch Formel (2) dargestellten Wiederholungseinheit zu der Gesamtmenge der durch die Formel (1) und die Formel (2) dargestellten Wiederholungseinheiten 20 bis 60 mol-% beträgt.

7. Polyimidfolie mit einer harten Deckschicht, die auf mindestens einer Oberfläche einer Polyimidfolie gebildet ist, die das Polyimidharz gemäß Anspruch 6 enthält.

## Revendications

1. Composition de résine polyimide comprenant une résine polyimide qui contient des unités de répétition représentées par la formule (1) suivante et la formule (2) suivante : 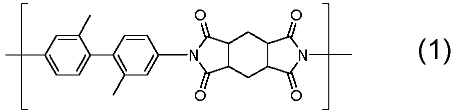 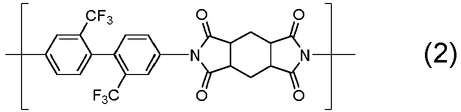 et des particules fines de silice,
dans laquelle la proportion des unités de répétition représentées par la formule (2) par rapport à la quantité totale des unités de répétition représentées par la formule (1) et la formule (2) est de 20 à 60 % en moles.

2. La composition de résine polyimide selon la revendication 1, dans laquelle la proportion des particules fines de silice par rapport à la quantité totale de la résine polyimide et les particules fines de silice est de 40 à 60 % en masse.

3. Film polyimide comprenant la composition de résine polyimide de la revendication 1 ou 2.

4. Le film polyimide selon la revendication 3, dans lequel une couche de revêtement dur est formée sur au moins une surface.

5. Stratifié ayant au moins un substrat choisi parmi un film plastique, une tranche de silicium, un feuille métallique et de verre, et une couche de résine polyimide qui est formée sur au moins une surface du substrat en utilisant la composition de résine de polyimide de la revendication 1 ou 2.

6. Résine polyimide contenant des unités de répétition représentées par la formule (1) suivante et la formule (2) suivante : 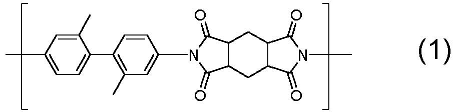 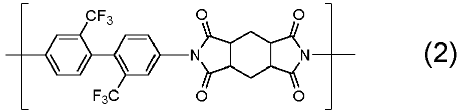 dans laquelle la proportion des unités de répétition représentées par la formule (2) par rapport à la quantité totale des unités de répétition représentées par la formule (1) et la formule (2) est de 20 à 60 % en moles.

7. Film polyimide ayant une couche de revêtement dur formée sur au moins une surface du film polyimide qui contient la résine polyimide de la revendication 6.
